# EUROPEAN PATENT APPLICATION

(11) **EP 1 533 711 A1**
(43) Date of publication of application: **25.05.2005**
(21) Application number: 02743853.0
(22) Date of filing: 08.07.2002
(51) Int. Cl.: G06F 15/177

(54) **PARALLEL CALCULATION PROGRAM, PARALLEL CALCULATION SYSTEM, AND PARALLEL CALCULATION CONTROL APPARATUS**

(71) Applicant: FUJITSU LIMITED, Kawasaki-shi, Kanagawa 211-8588 (JP)
(72) Inventor: MATSUBARA, Masazumi c/o Fujitsu Limited, kawasaki-shi, Kanagawa 211-8588 (JP)
(74) Representative: Hitching, Peter Matthew
(86) International application number: PCT/JP2002/006908
(87) International publication number: WO 2004/006116

(57) **Abstract**

Load statuses of computers are acquired by a load information acquiring unit, and a data allocation calculation unit (5) calculates and determines data allocated to the computers to equalize the loads of the computers based on the acquired load information, and moves data between the computers to equalize the loads of the computers. Furthermore, a process control unit generates a new process and deletes an existing process. Data is received from an existing process when a new process is added, and relative data is moved to another process when the existing process is deleted, so that process control which does not depend on the architectures of the computers is realized.

## Description

### TECHNICAL FIELD

The present invention relates to a parallel arithmetic program, parallel arithmetic system, and a parallel arithmetic management apparatus, which respectively generate processes in a plurality of programs and distribute data to the processes to perform arithmetic operations of the data in parallel and, more particularly, to a parallel arithmetic program, a parallel arithmetic system, and a parallel arithmetic management apparatus which can schedule calculation amounts of computers at high efficiency.

### BACKGROUND ART

As a conventional system that arithmetically processes a large amount of data efficiently, a parallel arithmetic system that operates a plurality of computers in parallel has been used. In the conventional parallel arithmetic system, processes that perform arithmetic operations of data for the computers are generated, and the data is distributed to the processes to perform arithmetic operations, thereby making the arithmetic operations on the data efficient.

In the conventional parallel arithmetic system, when a load on a predetermined computer increases or when processing abilities of the computers are different from each other, load distribution is performed in units of processes.

More specifically, the number of processes generated for those computers having large load or low processing ability is reduced, and the number of processes generated for those computers having small load or high processing ability is increased, thereby performing scheduling depending on the abilities and the load status of the computers.

A function that moves data between processes is given to the processes themselves, to move data from a computer having a large load to a computer having a small load, so that load distribution is realized.

However, in load distribution performed in units of processes in a conventional parallel arithmetic system, the units of the load distribution becomes rough, thereby making it impossible to perform sufficient load distribution. Moreover, in the conventional parallel arithmetic system, the number of processes determined at the start of an arithmetic operation cannot be changed.

On the other hand, if memory images of in-execution processes are stored as is, and if a function that continues processing in another computer is provided, binary compatibility is necessary to completely operate this function. More specifically, in a conventional parallel arithmetic system, moving data between the computers is restricted.

The present invention has been made to solve the above problems in the conventional technique, and has as its object to provide a parallel arithmetic program, a parallel arithmetic system, and a parallel arithmetic management apparatus that can efficiently schedule throughputs of computers.

### DISCLOSURE OF THE INVENTION

To solve the above problems, and to achieve the objectives, the parallel arithmetic program, the parallel arithmetic system and the parallel arithmetic management apparatus of the present invention, which generates arithmetic processes in a plurality of computers and distributes and allocates data to the arithmetic processes generated in the computers to perform arithmetic operations of data in parallel to each other, includes an allocation information storage step of storing allocation information representing allocation statuses of the data to the computers, a load information acquiring step of acquiring load information representing load statuses of the computers, a data allocation calculating step of deciding whether the data allocated to the computers must be changed based on the allocation information and the load information and calculating change contents of data allocation when the data allocation is necessary, and a data distributing step of moving the data between the computers based on the data allocation calculated at the data allocation calculating step.

According to the present invention, loads of the computers are acquired to decide whether the loads on the computers must be distributed. When the loads must be distributed, amounts of data allocated to the computers are changed to distribute the loads of the computers.

According to the parallel arithmetic program, the parallel arithmetic system and the parallel arithmetic management apparatus of the present invention, in the load information acquiring step, the arithmetic processes generated in the computers acquire time required for an arithmetic operation of a predetermined amount of data as the load information.

According to the present invention, an arithmetic process uses time required for an arithmetic operation of a predetermined amount of data as load information to add the original processing abilities of the computers to loads acting at this point of time, so that the processing abilities of the computers at the point of time can be obtained.

According to the parallel arithmetic program, the parallel arithmetic system and the parallel arithmetic management apparatus of the present invention, further includes a new process forming step of detecting a computer which can form an arithmetic process is detected from the computers and forming the new arithmetic process in the computers.

According to the present invention, a computer which can form a new arithmetic process is detected to form the new arithmetic process to make it possible to arbitrarily increase the number of processes.

According to the parallel arithmetic program, the parallel arithmetic system and the parallel arithmetic management apparatus of the present invention, further includes a process deleting process of moving data allocated to a predetermined computer to another computer to end an arithmetic process in the source computer.

According to the present invention, data allocated to a predetermined computer is moved to another computer, and an arithmetic process in the source computer is terminated, to make it possible to arbitrary reduce the number of processes.

According to the parallel arithmetic program, the parallel arithmetic system and the parallel arithmetic management apparatus of the present invention, further includes an arithmetic progress storage step of storing progresses of the arithmetic operations of the data in the arithmetic processes and a process moving step of restarting arithmetic operations of the data in different arithmetic processes based on the progress stored in the arithmetic progress storage step and the allocation information.

According to the present invention, a progress of an arithmetic operation of data is stored, and an arithmetic operation is restarted in another process to make it possible to move the process.

### BRIEF DESCRIPTION OF THE DRAWINGS

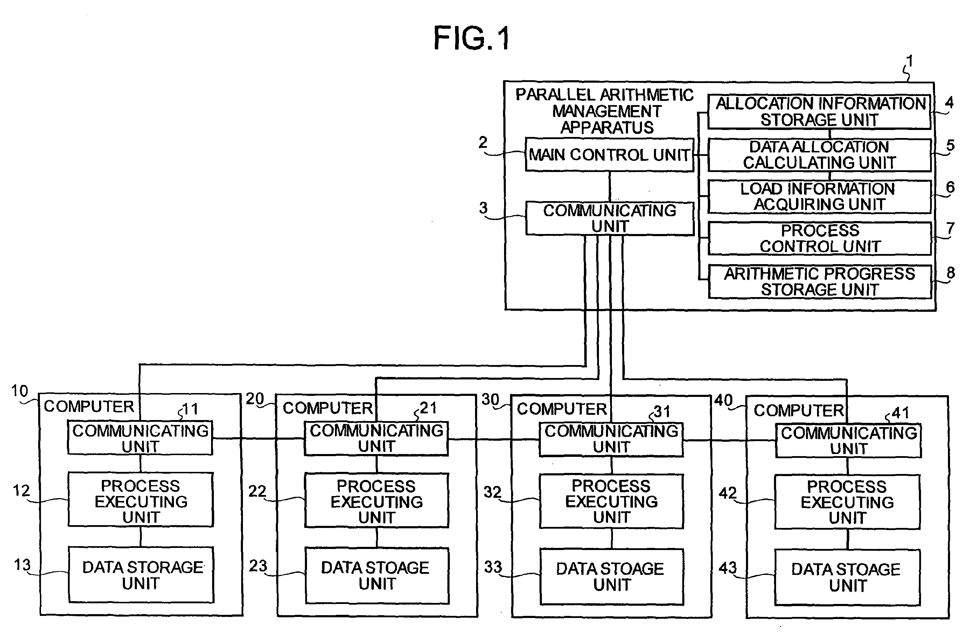

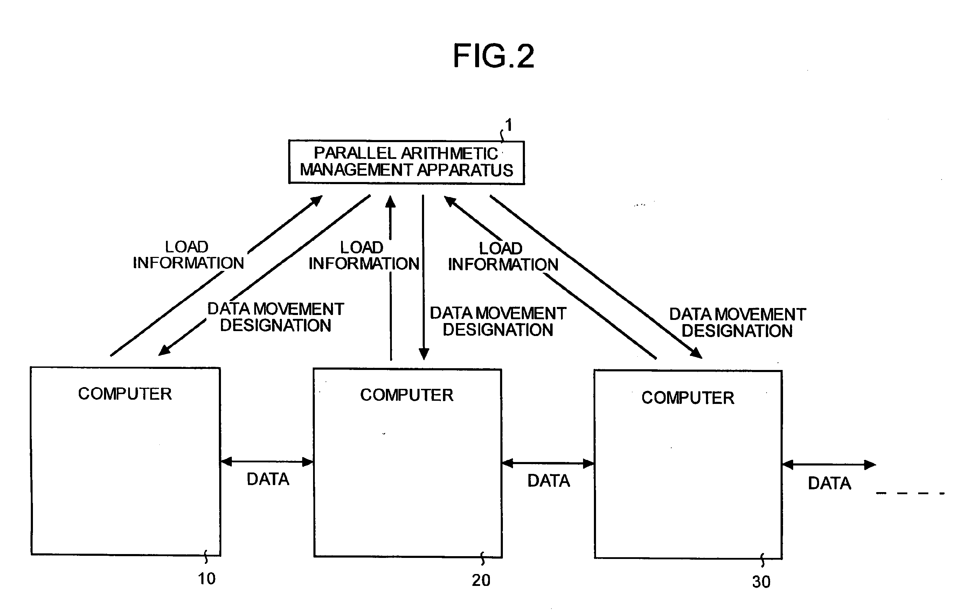

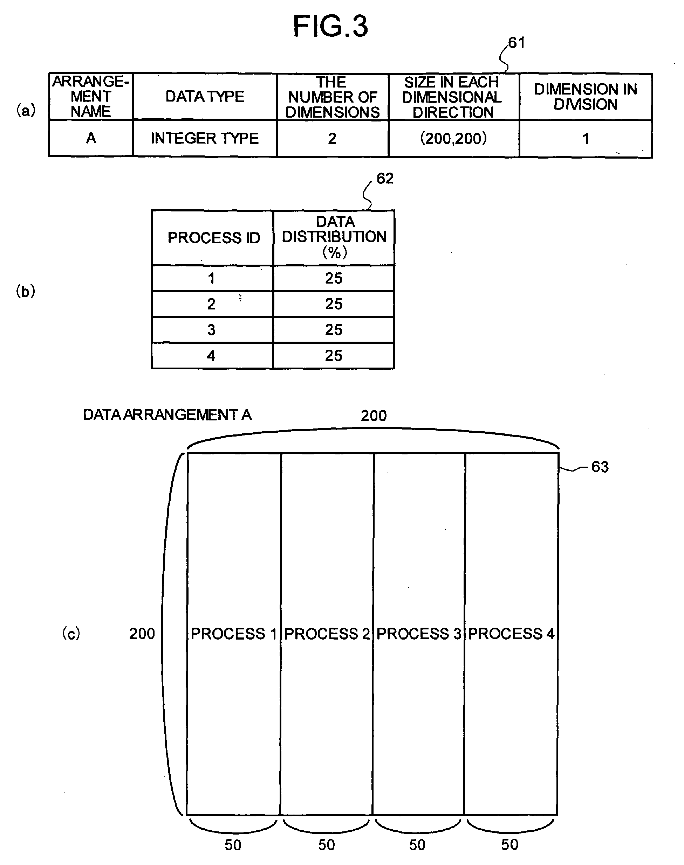

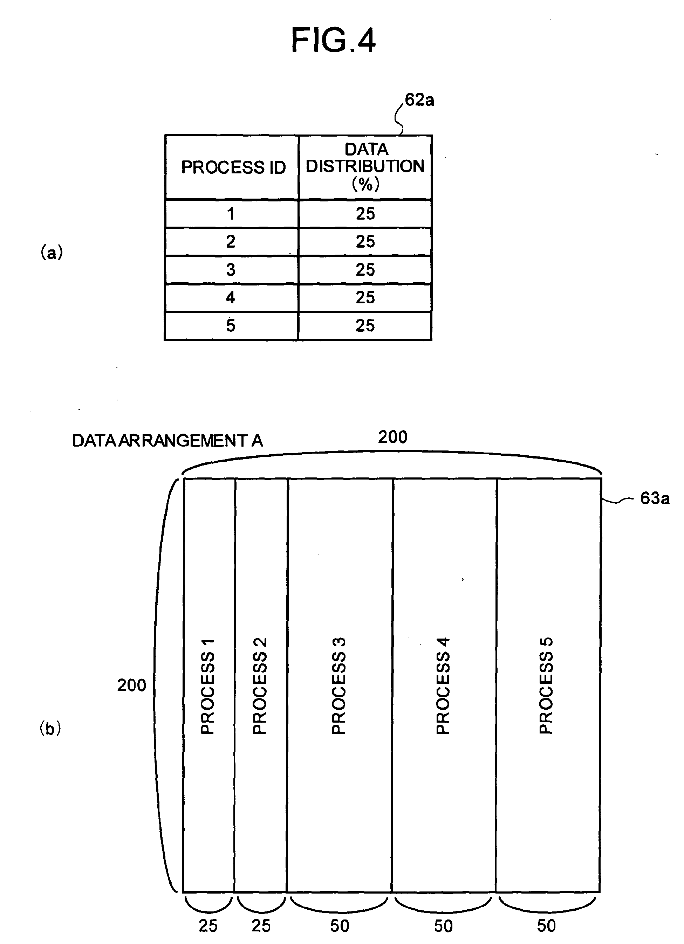

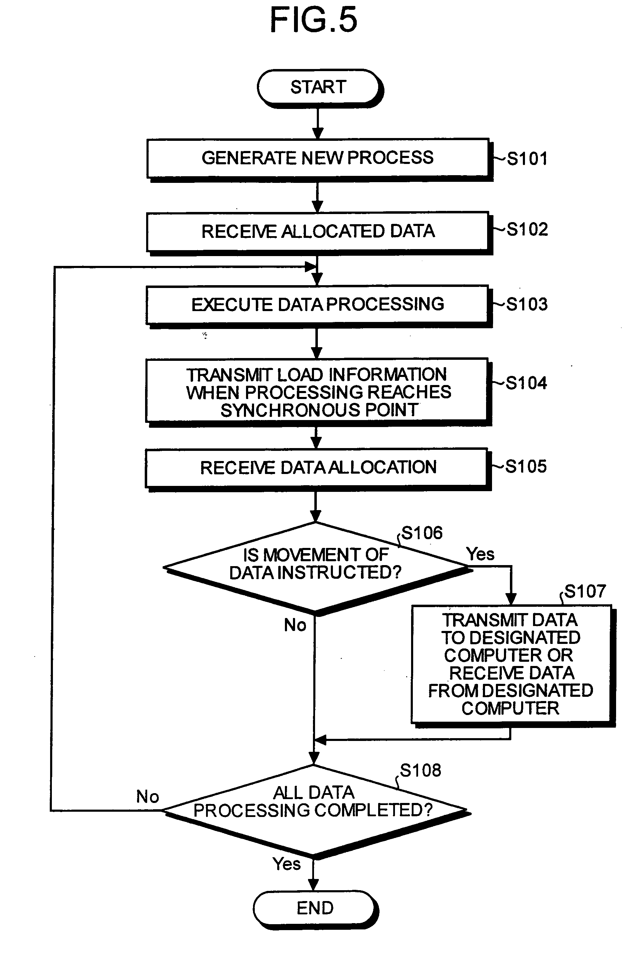

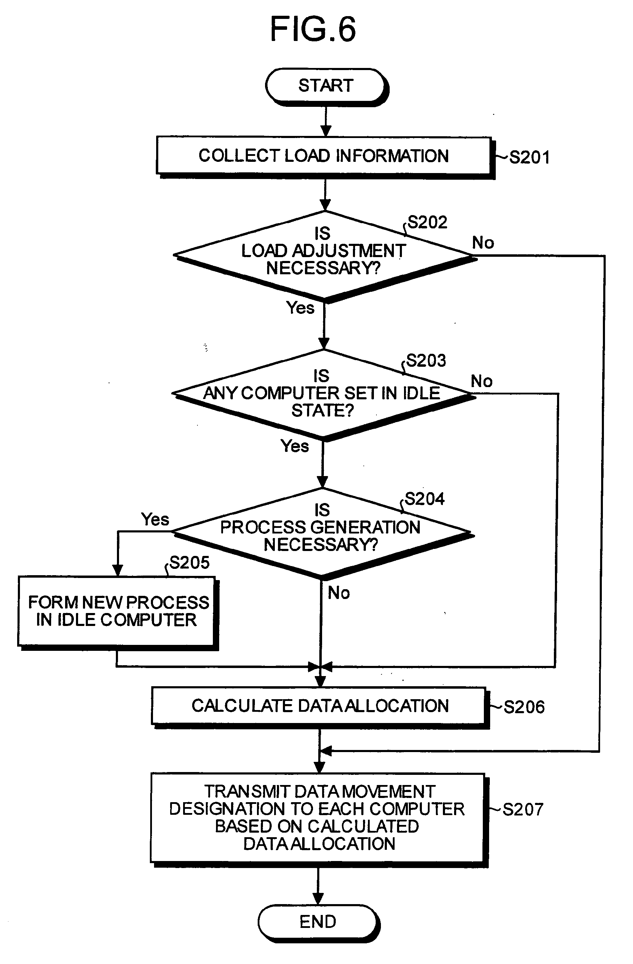

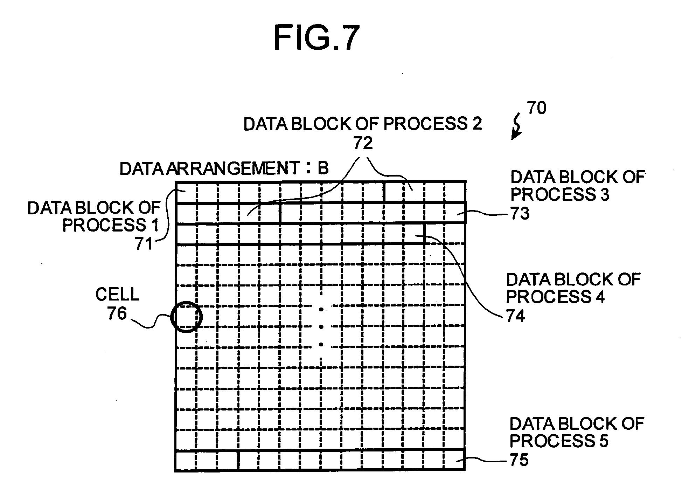

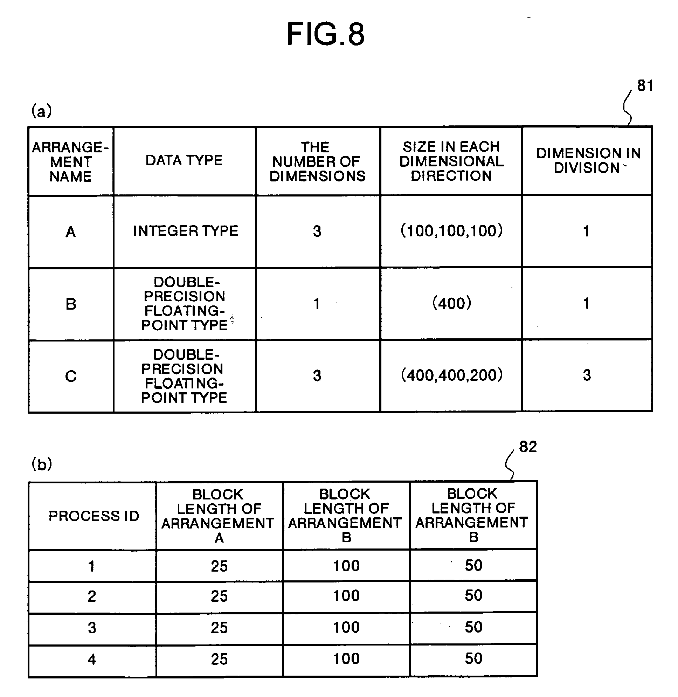

Fig. 1 is a schematic diagram of a schematic configuration of a parallel arithmetic system according to the present invention; Fig. 2 is a diagram for explaining an operation of the parallel arithmetic system; Fig. 3 is a diagram for explaining allocation information to be stored in relevant information storage unit; Fig. 4 is a diagram of relevant information obtained when a load state changes; Fig. 5 is a flowchart for explaining a processing operation of a computer in the parallel arithmetic system; Fig. 6 is a flowchart for explaining a processing operation of a parallel arithmetic management apparatus; Fig. 7 is a diagram of an example of a data dividing method; and Fig. 8 is a diagram of an example of data having a plurality of data arrangements.

### BEST MODE FOR CARRYING OUT THE INVENTION

Exemplary embodiments of a parallel arithmetic program, a parallel arithmetic system, and a parallel arithmetic management apparatus according to the present invention will be described below in detail with reference to the accompanying drawings.

Fig. 1 is a schematic diagram of the schematic configuration of a parallel arithmetic system according to the embodiment. In Fig. 1, the parallel arithmetic system includes a parallel arithmetic management apparatus 1, a computer 10, a computer 20, a computer 30, and a computer 40. The parallel arithmetic management apparatus 1 is connected to the computers 10, 20, 30, and 40 to manage and schedule processes generated in the computers.

The computer 10 has a communicating unit 11, a process executing unit 12, and a data storage unit 13 are arranged in the computer 10. The process executing unit 12 functions as a node that executes the processes generated by the parallel arithmetic management apparatus 1. The data storage unit 13 stores data that is arithmetically processed by the process executing unit 12. The communicating unit 11 is connected to the parallel arithmetic management apparatus 1 and the computer 20.

Similarly, the computer 20 has a communicating unit 21, a process executing unit 22, and a data storage unit 23are arranged in the computer 20. The process executing unit 22 functions as a node that executes the processes formed by the parallel arithmetic management apparatus 1. The data storage unit 23 stores data that is arithmetically processed by the process executing unit 22. In addition, the communicating unit 21 is connected to the parallel arithmetic management apparatus 1, the computer 10, and the computer 30.

The computers 30 and 40 have communicating units 31 and 41, process executing units 32 and 42, and data storage units 33 and 43 are arranged in the computers 30 and 40, respectively. The process executing units 32 and 42 function as nodes that execute the processes formed by the parallel arithmetic management apparatus 1. The data storage units 33 and 43 store data that is arithmetically processed by the process executing units 32 and 42. In addition, the communicating unit 31 is connected to the parallel arithmetic management apparatus 1, the computer 20, and the computer 40, and the communicating unit 41 is connected to the parallel arithmetic management apparatus 1 and the computer 30.

On the other hand, the parallel arithmetic management apparatus 1 includes a main control unit 3 and a main control unit 2 arranged in the parallel arithmetic management apparatus 1. The communicating unit 3 is connected to an allocation information storage unit 4, a data allocation calculating unit 5, a load information acquiring unit 6, a process control unit 7, and an arithmetic progress storage unit 8. The communicating unit 3 is connected to the communicating unit 11 in the computer 10, the communicating unit 21 in the computer 20, the communicating unit 31 in the computer 30, and the communicating unit 41 in the computer 40.

The process control unit 7 in the parallel arithmetic management apparatus 1 forms and deletes processes for the computers 10, 20, 30, and 40. The allocation information storage unit 4 stores allocation status of the data for the computers, i.e., allocations of the data processed by the processes generated by the computers, as allocation information. In addition, the load information acquiring unit 6 acquires load states of the computers, and stores the load states as load information.

The load states of the computers are determined by processing abilities of the computers themselves and the numbers of processes processed by the computers at a point of time. More specifically, the load states are values representing processing abilities of the computers at a predetermined point of time. It is assumed that the load states mean processing abilities of the computer themselves at the predetermined time, and that the load information means the data representing the load states.

The data allocation calculating unit 5 schedules the data allocation to the computers, based on the allocation information stored in the allocation information storage unit 4 and the load information acquired by the load information acquiring unit 6. The arithmetic progress storage unit 8 stores progress of arithmetic operations performed by the computers.

When arithmetic processing of data is performed by the parallel arithmetic system, as shown in Fig. 2, processes are generated in the computers to start data processing. The load states of the computers are acquired by the load information acquiring unit 6 of the parallel arithmetic management apparatus 1. The data allocation calculating unit 5 in the parallel arithmetic management apparatus 1 performs the scheduling. More specifically, the data allocation calculating unit 5 decides whether it is necessary to perform load distribution by moving the data. In this case, the decision whether the load distribution is necessary is realized by comparing the load states of the computers with each other to decide whether a computer has an outstandingly large load. At this time, a predetermined threshold may be set to compare the load information with the threshold. Because the load dispersion increases overhead costs, a tolerance of loads is determined by setting a threshold, thereby avoiding an increase in the unnecessary overhead costs.

When the load distribution must be performed, the data allocation calculating unit 5 calculates amounts of the data allocated to the computers based on the allocation information and the load information. In addition, the data allocation calculating unit 5 transmits calculation results to the respective computers. The computers 10, 20, and 30 move the data between the computers based on the calculation results received.

In this manner, the pieces of load information of the computers are acquired, and the data are moved between the computers based on the load information to change amounts of data allocated to the computers, to achieve load distribution. Because the load distribution is based on the amounts of data, the load distribution can be flexibly performed. In addition, because the loads can be distributed by moving the data between the computers, memory images need not be stored. Therefore, the load distribution does not require binary compatibility, and the load distribution can be performed between different architectures.

Allocation information stored in the allocation information storage unit 4 will be described below with reference to Fig. 3. Fig. 3(a) is entire data 61 representing entire data to be arithmetically operated, Fig. 3B is a data distribution table 62 that represents distribution of the data to the processes. Fig. 3(c) is a data allocation table 63 that represents allocation of the entire data shown in Fig. 3(a) to the processes.

As shown in Fig. 3(a), the entire data 61 includes information related to data arrangement A. The information included in the entire data 61 related to data arrangement A is required to handle data arrangement A, and does not include the actual data included in data arrangement A. In this case, the entire data 61 includes, with respect to data arrangement A, a data type "integer", the number of dimensions "two", a data size "200 × 200", and a dimension "1" in division.

As shown in Fig. 3(b), the entire data, i.e., 25% of data arrangement A is allocated to process 1. Similarly, 25% of data arrangement A is allocated to process 2, and 25% of data arrangement A is allocated to processes 3 and 4 each.

Processes 1 to 4 mentioned here indicate the processes to be executed in the computers 10, 20, 30, and 40. A single computer can also be caused to execute a plurality of processes. However, the computer 10 is caused to execute process 1, the computer 20 is caused to execute process 2, the computer 30 is caused to execute process 3, and the computer 40 is caused to execute process 4.

The data allocation table 63 shown in Fig. 3(c) represents allocation of the data of data arrangement A shown in Fig. 3(a) to the processes. According to the entire data 61, the size of data arrangement A is "200 × 200", and a dimension in division is "1". According to the data distribution table 62, 25% of data is allocated to processes 1 to 4 each. Therefore, data allocated to each of processes 1 to 4 has a size of "200 × 50".

In Fig. 3, data is equally distributed on the assumption that the load states of the computers 10, 20, 30, and 40 are equal. However, when a status in which some computer simultaneously executes the other process occurs, the load states of the computers are not equal to each other. When a new computer that can execute a process is introduced, a process is also generated for the computer, and the number of parallel processes is desirably increased.

Fig. 4 is a diagram of relative information obtained when a load state changes after the state shown in Fig. 3. Fig. 4 represents a state in which the processing abilities of process 1 and process 2 are half of those of process 3 and process 4, and process 5 is generated for another computer.

Fig. 4(a) is a data distribution table 62a that represents distribution of data to the processes. Fig. 4(b) is a data allocation table 63b that represents allocation of data of the entire data shown in Fig. 3(a) to processes. In this case, the entire data is the same as the entire data 61 shown in Fig. 3(a).

As shown in Fig. 4(a), when a large load acts on the computer 10 thereby decreasing the processing ability of the computer 10, the data allocated to the process 1 executed in the computer 10 is reduced. In this case, as indicated in the data distribution table 62a, 12.5% of the data are allocated to the process 1. Similarly, when a large load acts on the computer 20 thereby decreasing the processing ability of the computer 20, the data allocated to the process 2 executed in the computer 20 is reduced. In this case, as indicated in the data distribution table 62a, 12.5% of the data are allocated to the process 2. In addition, a new process 5 is generated, as shown in Fig. 4(b), and 25% of the data are allocated to the process 5.

Therefore, in the data allocation table 63a shown in Fig. 4(b), the sizes of the data allocated to the process 1 and the process 2 of the data arrangement A are "200 × 25" each, and the sizes of the data allocated to the process 3, the process 4, and the process 5 are "200 × 50" each.

In this manner, the data allocation calculating unit 5 allocates all the data to the processes in advance, and changes the amounts of the data to be allocated depending on the load states of the processes. At this time, the data allocation calculating unit 5 transmits the changed allocation of data i.e., the data allocation table 63a, to the computers through the communicating unit 3.

The communicating units 11, 21, 31, and 41 of the computers each receive the data allocation table 63a, and the data stored in the data storage units 13, 23, 33, and 43 are moved through the communicating units 11, 21, 31, and 41 based on the contents of the data allocation table 63a. The movement of the data is directly performed between the computers without using the parallel arithmetic management apparatus 1.

Acquisition of the load states of the computers will be described below. The processes formed on the computers by the process control unit 7 include a synchronous point in a main loop that performs data processing. When the processing reaches the synchronous point, each process transmits a time at which the processing reaches the synchronous point, to the parallel arithmetic management apparatus 1. Because each process generally executes the main loop a plurality of times, intervals between the times at which the processing reaches the synchronous point is calculated to make it possible to acquire load states of the computers. For example, when another process is not executed in a computer, the entire processing ability of the computer can be used, and the interval between the times at which the processing reaches the synchronous point becomes short. On the other hand, when another process is executed in a computer, the processing ability of the computer that can be used in the processes decreases, and the interval between the times at which the processing reaches the synchronous point becomes long.

Even though another process is not executed, a process executed in a computer having a high processing ability has a short interval between the times at which processing reaches the synchronous point, and a process executed in a computer having a low processing ability has a long interval between times at which processing reaches the synchronous point. When the data is to be allocated to a process, the necessary information is information representing how much processing the process can execute. Therefore, it is desirable that a larger amount of data be allocated to a process having a short interval between the times at which the processing reaches a synchronous point, to thereby achieve a high processing ability.

More specifically, when the interval between the times at which the processing reaches the synchronous point is used as the load information, a processing ability obtained by adding a load caused by a process in the processing to the original processing ability of the computer can be acquired.

A processing operation of the parallel arithmetic system according to the embodiment will be described below with reference to Fig. 5 and 6. Fig. 5 is a flowchart for explaining a processing operation of a computer in the parallel arithmetic system, and Fig. 6 is a flowchart for explaining a processing operation of a parallel arithmetic management apparatus. The process procedure of the computer will be described below with reference to Fig. 5 by using the computer 10 as an example.

In Fig. 5, the computer 10 receives a designation of process generation from the process control unit 7 and generates a process in the process executing unit 12 (step S101). The computer 10 receives data allocated based on allocation information stored in the allocation information storage unit 4 (step S102). The data is transmitted from another computer and received through the communicating unit 11.

An arithmetic operation of the data starts in the process executing unit 12 (step S103). The process executing unit 12 measures time at which the arithmetic operation of the data reaches a synchronous point, and transmits the time to the parallel arithmetic management apparatus 1 through the communicating unit 11 (step S104).

The computer 10 receives the data allocation table from the parallel arithmetic management apparatus 1 (step S105). When movement of the data in the data allocation table is instructed (Yes at step S106), the computer 10 transmits a part of the data stored in the data storage unit 13 to the designated computer (step S107).

When movement of the data in the data allocation table received is not instructed (No at step S106), and after step S107, the process executing unit 12 decides whether all data processing is complete (step S108). If some data processing is not completed (No at step S108), the process executing unit 12 continues the data processing (step S103). If all the data processing is completed (Yes at step S108), the processing operation ends.

Because the computers 20, 30, and 40 perform the same operations as that of the computer 10, a description for the computers 20, 30, and 40 will be omitted. A processing operation of the parallel arithmetic management apparatus 1 will be described below with reference to Fig. 6.

In Fig. 6, the parallel arithmetic management apparatus 1 causes the load information acquiring unit 6 to collect load information of the computers (step S201). The collection of the load information is performed by receiving from each computer, the time at which the processing reaches a synchronous point. The data allocation calculating unit 5 decides whether the loads must be adjusted (step S202).

If the loads must be adjusted (Yes at step S202), the process control unit decides whether any computer is in an idle state (step S203). The computer in the idle state is a computer that does not execute a process. In the computer that does not execute any process, the time at which processing reaches the synchronous point cannot be detected. Therefore, the computer in the idle state must be detected independent of acquisition of a load state.

If some computer is in an idle state (Yes at step S203), the data allocation calculating unit 5 decides whether a process must be generated (step S204). The decision is made based on a concrete effect obtained by generating a new process. When the new process is generated, overhead costs increase with an increase in the degree of parallelization. The data allocation calculating unit 5 determines that a new process must be generated based on an effect corresponding to the increase in overhead cost. The data allocation calculating unit 5 forms a new process in an idle computer (step S205)if it is determined that the new process must be generated (Yes at step S204).

When some computer is in an idle state (No in step S203), and when it is determined that a new process need not be generated (No in step S204), or after the formation of the new process (step S205) is completed, the data allocation calculating unit 5 calculates allocation of data such that loads are distributed to the processes (step S206), and stores the allocation in the allocation information storage unit 4.

After the calculation of the data allocation (step S206), or if load adjustment is not necessary (step S202), the communicating unit 3 transmits a designation of movement of the data to each computer based on the allocation information stored in the allocation information storage unit 4 (step S207), and the processing operation ends. When the load adjustment is not necessary, a message representing that movement of the data is not necessary is transmitted instead of the designation of movement of the data.

The arithmetic progress storage unit 8 in the parallel arithmetic management apparatus 1 will be described below. Each time the process of each computer reaches the synchronous point, the arithmetic progress storage unit 8 acquires a progress of an arithmetic operation at this time, and stores the progress.

On the other hand, the process control unit 7 can generate a process in an arbitrary computer or end the process. Therefore, the process control unit generates a new process, restarts the arithmetic operation from the progress stored by the arithmetic progress storage unit 8, and ends the original process to make it possible to move the process from a predetermined computer to another computer.

After all data allocated to a predetermined process during calculation of data allocation are allocated to another process, the processes are ended to thereby reduce the number of processes without adversely affecting the arithmetic contents of data.

More specifically, the process control unit 7 can increase/reduce the number of processes, and can arbitrarily move processes between the computers. In addition, because the movement of the processes is realized by the movement of data, the processes can be moved without storing a memory image or being limited by the architecture of the computer.

The arithmetic progress storage unit 8 in the parallel arithmetic management apparatus 1 stores data in the middle of an arithmetic operation in the arithmetic progress storage unit 8. However, the data in the middle of the arithmetic operation is not necessarily stored in the parallel arithmetic management apparatus 1, but an independent storage device may be arranged, or the data may be stored in the computers. On the other hand, storing the progress is useful as backup used when a defect occurs in a predetermined computer. Therefore, even though the data is stored in the computer, it is desirable to distribute the data to a plurality of computers, as a measure against risk reduction.

As described above, in the parallel arithmetic system according to the embodiment, the load status of the computers are acquired by the load information acquiring unit, and the data allocation calculating unit determines data allocated to the computers based on the acquired load information. The data are moved between the computers to make it possible to distribute the data depending on the load states of the computers, and the throughputs of the computers can be efficiently scheduled.

Because the loads of the processes are managed based on amounts of data, data allocated to a predetermined process can be moved to another process, and the number of processes can be safely and easily changed.

In addition, when a progress of a data arithmetic operation is stored, processing can be restarted in an arbitrary computer without being limited by the architecture.

In the embodiment, the number of types of data to be processed is one, the data are two-dimensional data, and division of the data is determined depending on a size in a predetermined direction. However, use of the present invention is not limited by these conditions, and the arbitrary number of data, an arbitrary data form, and an arbitrary data dividing method can be used.

An example of a data dividing method is shown in Fig. 7. In Fig. 7, data arrangement B, which is two-dimensional data, is divided into cells 76. When data arrangement B is to be distributed to each process, the distribution is performed by allocating the cells to the processes. In Fig. 7, a data block 71 including 10 cells is allocated to process 1, a data block 72 including 9 cells is allocated to process 2, a data block 74 including 9 cells is allocated to process 3, and a data block 74 including 12 cells is allocated to process 4. In this manner, the data arrangement is divided into cells, and the numbers of cells of data blocks allocated to the processes are adjusted to make it possible to distribute the data.

An example of data having data arrangements of three types is shown in Fig. 8. In Fig. 8, the data to be processed has three data arrangements, i.e., data arrangement A, data arrangement B, and data arrangement C. As shown in Fig. 8(a), entire data 81 includes information related to data arrangement A, data arrangement B, and data arrangement C. In this case, the entire data 81 includes, with respect to data arrangement A, a data type "integer", the number of dimensions "three", a data size "100 × 100 × 100", and a dimension "1" in division.

Similarly, the entire data 81 includes, with respect to data arrangement B, a data type "double-precision floating-point", the number of dimensions "one dimension", a data size "400", and a dimension "1" in division. Furthermore, the entire data 81 includes, with respect to data arrangement C, a data type" "double-precision floating-point", the number of dimensions "three", a data size "400 × 400 × 200", and a dimension "3" in division.

As shown in Fig. 8(b), 25% of the entire data, i.e., "100 × 100 × 25" of data arrangement A, "100" of data arrangement B, and "400 × 400 × 50" of data arrangement C are allocated to process 1.

Similarly, 25% of the entire data, i.e., "100 × 100 × 25" of data arrangement A, "100" of data arrangement B, and "400 × 400 × 50" of data arrangement C are allocated to processes 2, 3, and 4 each.

In this manner, even though the entire data has an arbitrary number of data arrangements, as in the above description, data can be allocated.

In the embodiment, a parallel arithmetic management apparatus is arranged independently of a computer. However, the parallel arithmetic management apparatus need not be arranged in an independent housing, and the parallel arithmetic apparatus may be incorporated in an arbitrary computer.

The functions of the parallel arithmetic management apparatus can also be realized by using software. In this case, as in other processes, a parallel arithmetic management program operating in the process executing unit of one of the computers can be obtained.

As described above, according to the present invention, loads of the computers are acquired to decide whether the loads on the computers must be distributed. When the loads must be distributed, amounts of data allocated to the computers are changed to distribute the loads of the computers. Therefore, a parallel arithmetic program, a parallel arithmetic system, and a parallel arithmetic management apparatus which can perform data distribution depending on the load states of computers and can efficiently schedule the throughputs of the computer can be advantageously achieved.

According to the present invention, an arithmetic process uses time required for an arithmetic operation of a predetermined amount of data as load information to add the original processing abilities of the computers to loads acting at this point of time, so that the processing abilities of the computers at the point of time can be obtained. Therefore, a parallel arithmetic program, a parallel arithmetic system, and a parallel arithmetic management apparatus which can properly recognize the throughputs of the computers and can efficiently schedule the throughputs of the computers can be advantageously achieved with simple configurations.

According to the present invention, a computer which can form a new arithmetic process is detected to form the new arithmetic process to make it possible to arbitrarily increase the number of processes. Data allocated to a predetermined computer is moved to another computer, and an arithmetic process in the source computer to make it possible to arbitrary reduce the number of processes. A progress of an arithmetic operation of data is stored, and an arithmetic operation is restarted in another process to make it possible to move the process. Therefore, the number of processes can be advantageously increased/reduced and moved without being limited by the architectures of computers.

### INDUSTRIAL APPLICABILITY

As described above, a parallel arithmetic program, a parallel arithmetic system, and a parallel arithmetic management apparatus according to the present invention make it possible to efficiently schedule the throughputs of computers and are useful for constructing a highly functional, highly reliable, and highly available parallel arithmetic system.

## Claims

1. A parallel arithmetic program which generates arithmetic processes in a plurality of computers and distributes and allocates data to the arithmetic processes generated in the computers to perform arithmetic operations of data in parallel to each other, comprising:
an allocation information storage step of storing allocation information representing allocation statuses of the data to the computers;
a load information acquiring step of acquiring load information representing load statuses of the computers;
a data allocation calculating step of deciding whether the data allocated to the computers must be changed based on the allocation information and the load information and calculating change contents of data allocation when the data allocation is necessary; and
a data distributing step of moving the data between the computers based on the data allocation calculated at the data allocation calculating step.

2. The parallel arithmetic program according to claim 1, wherein, in the load information acquiring step, the arithmetic processes generated in the computers acquire time required for an arithmetic operation of a predetermined amount of data as the load information.

3. The parallel arithmetic program according to claim 2, further comprising a new process forming step of detecting a computer which can form an arithmetic process is detected from the computers and forming the new arithmetic process in the computer.

4. The parallel arithmetic program according to claim 3, further comprising a process deleting step of moving data allocated to a predetermined computer to another computer to end an arithmetic process in the source computer.

5. The parallel arithmetic program according to claim 4, further comprising an arithmetic progress storage step of storing progresses of the arithmetic operations of the data in the arithmetic processes and a process moving step of restarting arithmetic operations of the data in different arithmetic processes based on the progress stored in the arithmetic progress storage step and the allocation information.

6. A parallel arithmetic system which generates arithmetic processes in a plurality of computers and distributes and allocates data to the arithmetic processes generated in the computers to perform arithmetic operations of data in parallel to each other, comprising:
an allocation information storage unit that stores allocation information representing allocation statuses of the data to the computers;
a load information acquiring unit that acquires load information representing load statuses of the computers;
a data allocation calculating unit that decides whether the data allocated to the computers must be changed based on the allocation information and the load information, and calculates change contents of data allocation when the data allocation is necessary; and
a data distributing unit that moves the data between the computers based on the data allocation calculated by the data allocation calculating unit.

7. The parallel arithmetic system according to claim 6, wherein, in the load information acquiring unit, the arithmetic processes generated in the computers acquire time required for an arithmetic operation of a predetermined amount of data as the load information.

8. The parallel arithmetic system according to claim 7, further comprising a new process forming unit that detects a computer which can form an arithmetic process, from the computers, and forms the new arithmetic process in the computer.

9. The parallel arithmetic system according to claim 8, further comprising a process deleting unit that moves data allocated to a predetermined computer to another computer to end an arithmetic process in the source computer.

10. The parallel arithmetic system according to claim 9, further comprising an arithmetic progress storage unit that stores progresses of the arithmetic operations of the data in the arithmetic processes, and a process moving unit that restarts arithmetic operations of the data in different arithmetic processes based on the progress stored in the arithmetic progress storage unit and the allocation information.

11. The parallel arithmetic system according to any one of claims 6 to 10, wherein the allocation information storage unit, the load information acquiring unit, and the data allocation calculating unit are arranged in one of the computers.

12. The parallel arithmetic system according to any one of claims 6 to 10, wherein the allocation information storage unit, the load information acquiring unit, and the data allocation calculating unit are arranged in a housing independent of the computers.

13. A parallel arithmetic management apparatus which generates arithmetic processes in a plurality of computers and distributes and allocates data to the arithmetic processes generated in the computers to perform arithmetic operations of data in parallel to each other, comprising:
an allocation information storage unit which stores allocation information representing allocation statuses of the data to the computers,
a load information acquiring unit which acquires load information representing load statuses of the computers;
a data allocation calculating unit which decides whether the data allocated to the computers must be changed based on the allocation information and the load information and calculates change contents of data allocation when the data allocation is necessary; and
a distribution command transmitting unit which transmits a command to move the data to the computers based on the data allocation calculated by the data allocation calculating unit.

14. The parallel arithmetic management apparatus according to claim 13, wherein, in the load information acquiring unit, the arithmetic processes generated in the computers acquire time required for an arithmetic operation of a predetermined amount of data as the load information.

15. The parallel arithmetic management apparatus according to claim 14, further comprising a new process forming unit that detects a computer which can form an arithmetic process, from the computers, and forms the new arithmetic process in the computer.

16. The parallel arithmetic management apparatus according to claim 15, further comprising a process deleting unit that moves data allocated to a predetermined computer to another computer to end an arithmetic process in the source computer.

17. The parallel arithmetic management apparatus according to claim 16, further comprising an arithmetic progress storage unit that stores progresses of the arithmetic operations of the data in the arithmetic processes, and a process moving unit that restarts arithmetic operations of the data in different arithmetic processes based on the progress stored in the arithmetic progress storage unit and the allocation information.

18. The parallel arithmetic management apparatus according to any one of claims 13 to 17, wherein the parallel arithmetic management apparatus is arranged in any one of the computers.

19. The parallel arithmetic management apparatus according to any one of claims 13 to 17, wherein the parallel arithmetic management apparatus is arranged in a housing independent of the computers.
